# EUROPÄISCHE PATENTSCHRIFT

(11) **EP 4 150 692 B1**
(45) Veröffentlichungstag und Bekanntmachung des Hinweises auf die Patenterteilung: **24.01.2024**
(21) Anmeldenummer: 21739261.2
(22) Anmeldetag: 17.06.2021
(51) Int. Cl.: H01M 8/1004, H01M 4/88, H01M 4/86, H01M 8/1018

(54) **VERFAHREN ZUR HERSTELLUNG EINES WENIGSTENS ZWEILAGIGEN LAMINATS EINER MEMBRANELEKTRODENEINHEIT**
METHOD FOR THE MANUFACTURE OF A MEMBRANE ELECTRODE ASSEMBLY LAMINATE CONTAINING AT LEAST 2 LAYERS
PROCÉDÉ POUR LA MANUFACTURE D'UNE STRUCTURE STRATIFIÉE D'UN ASSEMBLAGE MEMBRANE-ÉLECTRODE CONTENANT AU MOINS 2 COUCHES

(30) Priorität: 22.09.2020 DE 102020124576
(43) Veröffentlichungstag der Anmeldung: 22.03.2023
(73) Patentinhaber: Audi AG, 85045 Ingolstadt (DE)
(72) Erfinder: KÖNNICKE, Daniela, 74861 Neudenau (DE)
(74) Vertreter: Hentrich Patent- & Rechtsanwaltspartnerschaft mbB
(86) Internationale Anmeldenummer: PCT/EP2021/066384
(87) Internationale Veröffentlichungsnummer: WO 2022/063448

(56) Entgegenhaltungen:
- EP-A2- 1 806 803
- JP-A- 2005 019 275
- US-A1- 2019 237 788

## Beschreibung

Die Erfindung betrifft ein Verfahren zur Herstellung eines wenigstens zweilagigen Laminats einer Membranelektrodeneinheit (MEA) für eine Brennstoffzelle.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente eine protonenleitfähige (Elektrolyt-)Membran, der Elektroden zugeordnet sind und somit eine gemeinsame Membranelektrodeneinheit (MEA für "membrane electrode assembly") bilden. Im Betrieb der Brennstoffzellenvorrichtung mit einer Mehrzahl zu einem Brennstoffzellenstapel zusammengefasster Brennstoffzellen wird der Brennstoff, insbesondere Wasserstoff (H₂) oder ein wasserstoffhaltiges Gasgemisch der Anode zugeführt. In Falle eines wasserstoffhaltigen Gemisches wird dieses zunächst reformiert und so Wasserstoff bereit gestellt. An der Anode findet eine elektrochemische Oxidation von H₂ zu H⁺ unter Abgabe von Elektronen statt. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet.

Es ist bekannt, die einzelnen Komponenten der Membranelektrodeneinheit in diskreten, d.h. einzelnen Schritten zu einem Verbund zu fügen, wobei das die Komponenten fügende Element aus einem Klebstoff in Form eines Flüssigklebstoffs gebildet ist, der beim Aushärten zugleich die Anoden- von der Kathodenseite gasdicht separiert. Dieser Flüssigklebstoff benötigt im Fertigungsprozess eine gewisse Zeit, bis er aushärtet und damit die nötige Stabilität, insbesondere bei der Handhabung des Verbunds der Membranelektrodeneinheit besitzt.

Die EP 1 806 803 A2 zeigt eine Anordnung für elektrochemische Vorrichtungen, die eine Membran und zwei elektrokatalytische Schichten auf jeder Seite davon umfassen. In der US 2019 237 788 A1 wird ein System und ein Verfahren zur Herstellung von Membran-Elektroden-Einheiten (MEA) beschrieben. Insbesondere handelt es sich um ein System, das die Hochgeschwindigkeitsbildung von vollständig montierten MEAs ermöglicht, beispielsweise durch das Anbringen von Gasdiffusionsschichten an katalysatorbeschichteten Membranen. Und die JP 2005 019 275 A zeigt ein Verfahren zum Befestigen und Halten der dreischichtigen MEA-Folie, bei dem die Elektrodenmembranen, deren Gesamtumfang vor dem Zusammenfügen um etwa 5-3 mm von einer festen Polymermembran der MEA abgeschnitten wird, paarweise angeordnet und auf der Oberseite einer flexiblen Folie, die an einem Befestigungsrahmen aus Metallblech befestigt ist, angebracht werden.

In der WO 2006 / 047 950 A1 wird die Herstellung einer Membranelektrodeneinheit zusammen mit Gasdiffusionslagen beschrieben, die in einer Heißpresse zu einem Verbund gefügt werden. In der Heißpresse wird dabei ein Hot-Melt-Klebestreifen geschmolzen bis dieser vernetzt und aushärtet. Die WO 2013 / 178 987 A1 beschreibt ein Verfahren für den Zusammenbau eines Brennstoffzellenstapels, wobei eine vorgefertigte Membranelektrodeneinheit mit einer daran angehefteten Gasdiffusionslage (sog. vierlagige MEA) über einen Klebestreifen mit einer weiteren Gasdiffusionslage und einer Bipolarplatte stoffschlüssig verbunden wird. In der EP 1 772 922 A1 wird die Zusammensetzung einer Elektrodenschicht für eine Membranelektrodeneinheit einer Brennstoffzelle beschrieben, wobei die Elektrodenschicht einen Polymerbinder umfasst, der an die Katalysatorpartikel mittels eines Plasmas, durch eine UV-Bestrahlung oder durch eine Gamma-Bestrahlung bindet.

Die DE 10 2016 006 225A1 zeigt ein Verfahren zur Herstellung eines Produktes aus mindestens zwei mittels mindestens eines Klebstoffs miteinander verbundenen Komponenten, wobei eine erste Klebstoffmenge auf eine erste Komponente aufgebracht wird. Die US 2013/306237A1 beschreibt eine Spannvorrichtung zum Fixieren von laminiertem Material und ein Verfahren zum Herstellen von laminierten Materialien, beispielsweise zur Herstellung einer Membranelektrodenanordnung. Dabei wird ein protonenleitfähiger Elektrolyt, und zwei eine Katalysatorschicht umfassende Elektroden in die Spannvorrichtung eingespannt und in ihr heißverpresst, wobei zwischen den Schichten eine Element zur Stabilisierung der unausgehärteten Schichten eingebracht werden kann.

Es ist die Aufgabe der vorliegenden Erfindung, ein Verfahren zur Herstellung eines wenigstens zweilagigen Laminats einer Membranelektrodeneinheit anzugeben, das bei der Großserienfertigung der Brennstoffzellen betriebssicher gehandhabt werden kann, wobei es bei der Handhabung höheren Kräften aufgrund der verkürzten Taktzeiten für die Herstellung der einzelnen Komponenten standhält.

Diese Aufgabe wird gelöst mit einem Verfahren mit den Merkmalen des Anspruchs 1. Vorteilhafte Ausgestaltungen mit zweckmäßigen Weiterbildungen der Erfindung sind in den abhängigen Ansprüchen angegeben.

Das erfindungsgemäße Verfahren zur Herstellung eines wenigstens zweilagigen Laminats einer Membranelektrodeneinheit (MEA) für eine Brennstoffzelle, umfasst insbesondere die folgenden Schritte:
- Bereitstellen eines Membranmaterials aus einem protonenleitfähigen Elektrolyten,
- Bereitstellen eines wenigstens einen Katalysator umfassenden Elektrodenmaterials,
- Auftragen eines Flüssigklebstoffes auf eine Oberfläche des Membranmaterials und/oder auf eine Oberfläche des Elektrodenmaterials, und
- Kontaktieren der Oberflächen des Membranmaterials und des Elektrodenmaterials zur Ausbildung einer stoffschlüssigen Verbindung mittels des Flüssigklebstoffs, wobei zusätzlich ein Fertigungshilfsmittel in einen oder auf einen Verbund eingebracht oder aufgebracht wird, der aus dem Elektrodenmaterial, aus dem Membranmaterial und dem noch unausgehärteten Flüssigklebstoff gebildet ist, wobei das Fertigungshilfsmittel dazu eingerichtet ist, den unausgehärteten Verbund zu stabilisieren.

Auf diese Weise wird also ein zusätzliches Fertigungshilfsmittel dafür verwendet, das dem noch unausgehärteten Gesamtverbund eine erhöhte Stabilität und damit eine verbesserte Handhabung bietet. Das Fertigungshilfsmittel wird dabei auf den unausgehärteten Verbund aufgebracht oder auch zwischen die einzelnen Lagen des Verbunds eingebracht oder eingesetzt. Auf diese Weise ist es also möglich, die Membranelektrodeneinheit in einem kontinuierlichen Prozess herzustellen, zum Beispiel bei einer Fertigung "Rolle-zu Rolle", wie dies beispielsweise aus dem Zeitungsdruck bekannt ist.

In diesem Zusammenhang ist es zusätzlich möglich, dass auch ein weiteres wenigstens einen Katalysator umfassendes Elektrodenmaterial bereitgestellt wird, das auf einer gegenüberliegenden Oberfläche der Membran oder des Membranmaterials aufgetragen und mittels Flüssigklebstoff fixiert wird, womit dann auch beiden Seiten des Membranmaterials ein Kathodenmaterial aufgetragen ist. Auch auf der Seite des weiteren Kathodenmaterials kann ein zusätzliches Fertigungshilfsmittel eingebracht werden, wobei das Fertigungshilfsmittel auch zwischen die einzelnen Schichten der noch unausgehärteten Membranelektrodeneinheit integriert werden kann.

Es hat sich als vorteilhaft erwiesen, wenn das Fertigungshilfsmittel zur Stabilisierung des unausgehärteten Verbunds in einem abseits eines aktiven Bereichs der Membranelektrodenanordnung gelegenen Randbereich appliziert wird. Auf diese Weise ist es also möglich, dass der aktive Bereich, also der Bereich, in welchem die eigentliche Brennstoffzellenreaktion stattfindet, frei vom Fertigungshilfsmittel bleibt, sodass dieses die Strömung von Prozessgasen nicht negativ beeinflusst. Vielmehr kann das Fertigungshilfsmittel aufgrund des Platzierens in einem Randbereich zusätzlich dafür genutzt werden, dass die Membranelektrodeneinheit eine erhöhte Dichtigkeit für Medien aufweist, da es zumindest teilweise auch als Randdichtung agieren kann.

Es ist die Möglichkeit gegeben, dass das Fertigungshilfsmittel zur Stabilisierung des unausgehärteten Verbunds punktuell appliziert wird. Auf diese Weise ist nur ein geringer Materialaufwand für das Fertigungshilfsmittel vonnöten was zugleich aber zu einem sicheren und stabilisierten Verbund mit unausgehärtetem Flüssigklebstoff führt. Alternativ oder ergänzend kann das Fertigungshilfsmittel zur Stabilisierung des unausgehärteten Verbunds auch flächig aufgetragen werden, wobei auch der komplette Randbereich, also der abseits des aktiven Bereichs liegende Bereich der Membranelektrodenanordnung, flächig vom Fertigungshilfsmittel bedeckt sein kann. Dies führt zu einer zusätzlichen Stabilisierung und einer zusätzliche Abdichtung, beispielsweise auch gegen den Austritt des Flüssigklebstoffs bei der Handhabung des unausgehärteten Verbunds. Alternativ oder ergänzend kann das Fertigungshilfsmittel auch linienförmig appliziert werden, sodass auch hier eine zusätzliche Dichtigkeit zu verzeichnen ist.

Das Fertigungshilfsmittel kann beispielsweise durch eine mechanische Verbindung wie zum Beispiel durch ein Klemmen oder ein Heften am unausgehärteten Verbund angebracht werden.

Erfindungsgemäß hat es sich als vorteilhaft erwiesen, wenn das Fertigungshilfsmittel als ein Fügemittel zur stoffschlüssigen Anbindung an das Membranmaterial und/oder an das Elektrodenmaterial gebildet ist, welches gegenüber dem Flüssigklebstoff eine geringere Aushärtezeit besitzt. Somit ist also neben dem Flüssigklebstoff ein weiteres Fügemittel durch das Fertigungshilfsmittel gegeben, das aber schneller aushärtet und damit schneller eine Stabilisierungsfunktion für den noch unausgehärteten Verbund mit dem Flüssigklebstoff bietet.

In diesem Zuge ist es von Vorteil, wenn das Fügemittel ein durch UV-Licht aushärtbarer Klebstoff ist, und wenn das Fügemittel unter UV-Bestrahlung ausgehärtet wird, noch bevor der Flüssigklebstoff ausgehärtet ist. Bei einem Einsatz eines UV-härtbaren Klebstoffes lässt sich ebenfalls eine besonders einfache Serienfertigung für die Membranelektrodeneinheiten realisieren, da damit auf einfache Weise Trocknungskammern durchlaufen werden können und somit ein bahnförmiges Membranmaterial mit einem bahnförmigen Katalysatorelektrodenmaterial beschichtet werden kann.

Es ist auch die Möglichkeit gegeben, dass das Fügemittel ein Haftklebstoff in Form eines Klebebands ist, das abseits des Flüssigklebstoffes an einer oder an beiden Oberflächen appliziert wird. Der Einsatz eines Klebebands bietet den Vorteil, dass dieses bereits trocken ist, wobei es insbesondere auch als ein zweiseitig haftendes Klebeband gebildet sein kann, um ein zusätzliches Fügen des Membranmaterials und des Elektrodenmatenals bereitzustellen. Zudem ist die Möglichkeit vorhanden, dass das Fügemittel ein Schmelzklebstoff ist, der unter Wärmeeinwirkung verflüssigt und wieder ausgehärtet wird, noch bevor der Flüssigklebstoff ausgehärtet ist. Auf diese Weise vernetzt der Schmelzklebstoff mit den Oberflächen des Membranmaterials und des Elektrodenmaterials und härtet aus, wobei es aufgrund dieser "Voraushärtung" des Flüssigklebstoff unbedenklich ist, dass dieser erst zu einem späteren Zeitpunkt aushärtet, so dass die vorgefertigte Membranelektrodeneinheit schon frühzeitig weiteren Prozessschritten zugeführt werden kann.

Als besonders schnelltrocknender und für die Materialwahl der Einzelkomponenten der MEA vorteilhafter Klebstoff ist ein Cyanacrylatklebstoff. Dieser härtet typischerweise sehr viel schneller aus, als der Flüssigklebstoff.

Es ist ferner die Möglichkeit ferner gegeben, dass das Fügemittel eine Laminatverbindung ausbildet, die noch vor dem Flüssigklebstoff aushärtet.

Es ist alternativ oder ergänzend von Vorteil, wenn das Fertigungshilfsmittel einen Rahmen umfasst, der auf den unausgehärteten Verbund aufgesetzt oder in diesen integriert wird, und dass der Rahmen punktuell und/oder flächig und/oder linienförmig, insbesondere unter Einsatz eines Lasers, aufgeschmolzen und wieder ausgehärtet wird, noch bevor der Flüssigklebstoff aushärtet. Auf diese Weise kann also der Rahmen ("frame") angeschmolzen werden, womit er mit der Einen oder der Anderen Oberfläche des Membranmaterials oder des Elektrodenmaterials vernetzt und nach dem Aushärten stoffschlüssig anbindet. Durch den Einsatz dieses Rahmens ist eine zusätzliche Stabilität gegeben, die die Handhabung der vorgefertigten Membranelektrodeneinheit mit noch flüssigem oder unausgehärtetem Flüssigklebstoff erleichtert.

Um die Fertigungsschritte so schnell wie möglich durchführen zu können, hat sich ein Fertigungshilfsmittel als vorteilhaft erwiesen, das nach dem Aushärten des Flüssigklebstoffes im Verbund der Membranelektrodeneinheit verbleibt. Es ist aber auch die Möglichkeit gegeben, dass das Fertigungshilfsmittel vor dem Zusammenbau oder während dem Zusammenbau einer Vielzahl von Membranelektrodeneinheiten zu einem Brennstoffzellenstapel ("stack") wieder aus dem Verbund entfernt wird.

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigt:

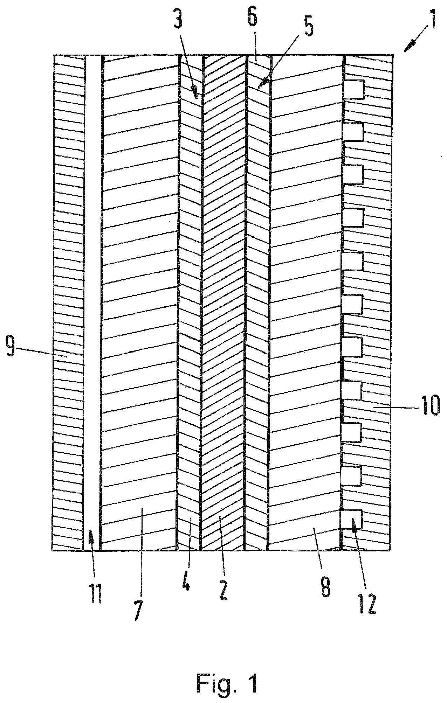

- Fig. 1: eine schematische Darstellung des Aufbaus einer Brennstoffzelle mit einem dreiteiligen Laminat einer Membranelektrodeneinheit (MEA).

In Figur 1 ist eine Brennstoffzelle 1 gezeigt. Hierbei ist eine semipermeable Elektrolytmembran 2 auf einer ersten Seite 3 mit einer ersten Elektrode 4, vorliegend der Anode, und auf einer zweiten Seite 5 mit einer zweiten Elektrode 6, vorliegend der Kathode, bedeckt und stoffschlüssig mit diesen verbunden. Die Elektroden 4, 6 und die Membran 2 bilden einen Verbund einer sogenannten Membranelektrodeneinheit (kurz MEA). Die erste Elektrode 4 und die zweite Elektrode 6 umfassen Trägerpartikel, auf denen Katalysatorpartikel aus Edelmetallen oder Gemischen umfassend Edelmetalle wie Platin, Palladium, Ruthenium oder dergleichen, angeordnet oder geträgert sind. Diese Katalysatorpartikel dienen als Reaktionsbeschleuniger bei der elektrochemischen Reaktion der Brennstoffzelle 1. Die Trägerpartikel können kohlenstoffhaltig sein. Es kommen aber auch Trägerpartikel in Betracht, die aus einem Metalloxid gebildet sind oder Kohlenstoff mit einer entsprechenden Beschichtung. Die Elektroden 4, 6 sind vorzugsweise mit einer Mehrzahl an Katalysatorpartikeln gebildet, die als Nanopartikel, zum Beispiel als Kern-Hülle-Nanopartikel ("core-shell-nanoparticles") gebildet sein können. Sie weisen den Vorteil einer großen Oberfläche auf, wobei das Edelmetall oder die Edelmetalllegierung lediglich an der Oberfläche angeordnet ist, während ein geringerwertiges Metall, beispielsweise Nickel oder Kupfer, den Kem des Nanopartikels bilden. In einer derartigen Polymerelektrolytmembran-Brennstoffzelle (PEM-Brennstoffzelle) werden an der ersten Elektrode 5 (Anode) Brennstoff oder Brennstoffmoleküle, insbesondere Wasserstoff, in Protonen und Elektronen aufgespaltet. Die Elektrolytmembran 2 lässt die Protonen (z.B. H+ ) hindurch, ist aber undurchlässig für die Elektronen (e-). Die Elektrolytmembran 2 ist bei diesem Ausführungsbeispiel aus einem lonomer, vorzugsweise einem sulfonierten Tetrafluo- rethylen-Polymer (PTFE) oder einem Polymer der perfluorierten Sulfonsäure (PFSA) gebildet. An der Anode erfolgt dabei die folgende Reaktion:
4H+ + 4e_ (Oxidation/Elektronenabgabe). Während die Protonen durch die Elektrolytmembran 2 zur zweiten Elektrode 6 (Kathode) hindurchtreten, werden die Elektronen über einen externen Stromkreis an die Kathode oder an einen Energiespeicher geleitet. An der Kathode ist ein Kathodengas, insbesondere Sauerstoff oder Sauerstoff enthaltende Luft, bereitgestellt, so dass hier die folgende Reaktion stattfindet: O2 + 4H+ + 4e_

2H2O (Reduktion/Elektronenauf- nahme). Vorliegend ist den Elektroden 4, 6 jeweils eine Gasdiffusionslage 7, 8 zugeordnet, wovon die eine Gasdiffusionslage 7 der Anode und die andere Gasdiffusionslage 8 der Kathode zugeordnet ist. Zudem ist der anodenseitigen Gasdiffusionslage 7 eine als Bipolarplatte 9 gestaltete Flussfeldplatte zur Zuführung des Brennstoffgases zugeordnet, die über ein Brennstoffflussfeld 11 verfügt. Mittels des Brennstoffflussfeldes 11 wird der Brennstoff durch die Gasdiffusionslage 7 hindurch der Elektrode 4 zugeführt. Kathodenseitig ist der Gasdiffusionslage 8 eine ein Kathodengasflussfeld 12 umfassende, ebenfalls als Bipolarplatte 10 gestaltete Flussfeldplatte zur Zuführung des Kathodenga- ses an die Elektrode 6 zugeordnet.

Die Membranelektrodeneinheit (MEA) der vorliegenden Erfindung muss nicht in diskreten Schritten hergestellt werden und es muss auch nicht darauf gewartet werden, dass die einzelnen Komponenten beim stoffschlüssigen Fügen mit einem Flüssigklebstoff fest miteinander verbunden sind, bevor die Membranelektrodeneinheit weiterverarbeitet wird. Die vorliegende Erfindung beschäftigt sich damit, dass der Flüssigklebstoff im Fertigungsprozess eine gewisse Zeit benötigt, bis er die erforderliche Festigkeit erreicht hat, sodass die Handhabung mit dem Flüssigklebstoff allein, insbesondere bei einem kontinuierlichen Fertigungsprozess, sich als schwierig erwiesen hat.

Es ist daher von Vorteil, wenn ein bahnförmiges, auf einer Rolle bereitgestelltes, protonenleitfähiges Membranmaterial abgerollt und in einer geeigneten Vorrichtung zu einem ersten Auftragungswerkzeug transportiert wird, mit welchem der Flüssigklebstoff auf eine Oberfläche des Membranmaterials aufgetragen wird. Zusätzlich oder alternativ kann der Flüssigklebstoff aber auch auf eine Oberfläche eines Elektrodenmaterials aufgetragen werden, das beispielsweise ebenfalls auf einer Rolle oder auch als Einzelstück bereitgestellt sein kann. Nach dem Auftrag des Flüssigklebstoffes werden die Oberflächen des Membranmaterials und des Elektrodenmaterials zur Ausbildung einer stoffschlüssigen Verbindung mittels des Flüssigklebstoffes aufeinander gebracht und kontaktieren sich dadurch. Zusätzlich wird ein Fertigungshilfsmittel in einen oder auf einen Verbund eingebracht oder aufgebracht, der aus dem Elektrodenmaterial, aus dem Membranmaterial und dem noch unausgehärteten Flüssigklebstoff gebildet ist, wobei das Fertigungshilfsmittel dazu eingerichtet ist, den unausgehärteten Verbund zu stabilisieren.

In diesem Zuge wird das Fertigungshilfsmittel zur Stabilisierung des unausgehärteten Verbunds in einem abseits eines aktiven Bereichs der Membranelektrodeneinheit gelegenen Randbereich appliziert. Somit wird das Fertigungshilfsmittel also abseits desjenigen aktiven Bereichs appliziert, in welchem die Brennstoffzellenreaktion stattfindet. Im aktiven Bereich liegt mit anderen Worten kein Fertigungshilfsmittel zur Stabilisierung des unausgehärteten Verbunds vor. Das Fertigungshilfsmittel kann punktuell und/oder flächig und/oder linienförmig appliziert werden und liegt vorzugsweise als ein weiteres Fügemittel zur stoffschlüssigen Anbindung an das Membranmaterial und/oder an das Elektrodenmaterial vor, welches aber gegenüber dem Flüssigklebstoff eine geringere Aushärtezeit besitzt. Das Fügemittel kann beispielsweise ein durch UV-Licht aushärtbarer Klebstoff sein, wobei das Fügemittel unter UV-Bestrahlung ausgehärtet wird, noch bevor der Flüssigklebstoff ausgehärtet ist. Alternativ oder ergänzend kann das Fügemittel ein Haftklebstoff in Form eines Klebebands sein, dass abseits des Flüssigklebstoffes an einer oder an beiden Oberflächen des Membranmaterials oder des Elektrodenmatenals appliziert wird. Das Fügemittel kann auch ein Schmelzklebstoff sein, der unter Wärmeeinwirkung verflüssigt und wieder ausgehärtet wird, noch bevor der Flüssigklebstoff ausgehärtet ist. Das Fügemittel bildet vorzugsweise eine Laminatverbindung aus, die als solche noch vor dem Flüssigklebstoff aushärtet.

Alternativ oder ergänzend kann das Fertigungshilfsmittel aber auch einen Rahmen umfassen, der auf den unausgehärteten Verbund aufgesetzt oder in diesen integriert wird, wobei der Rahmen punktuell und/oder flächig und/oder linienförmig, insbesondere unter Einsatz eines Lasers, aufgeschmolzen und wieder ausgehärtet wird, noch bevor der Flüssigklebstoff aushärtet.

Es ist die Möglichkeit gegeben, dass das Fertigungshilfsmittel nach dem Aushärten des Flüssigklebstoffs im nun getrockneten Verbund, also in der fertigen Membranelektrodeneinheit verbleibt. Beim Fertigungshilfsmittel ist es dabei aber nicht erforderlich, dass es die für eine Brennstoffzelle erforderlichen Produktanforderungen erfüllt, es muss lediglich die benötigte Festigkeit für die Handhabung bereitstellen und damit die benötigte Stabilisierung der Membranelektrodeneinheit im Fertigungsprozess gewährleisten. Das Fertigungshilfsmittel kann gegebenenfalls nach der Herstellung der Membranelektrodeneinheit, insbesondere nach dem Aushärten des Flüssigklebstoffes und insbesondere nach dem Verbinden des Membranmaterials mit einem ersten Elektrodenmaterial auf seiner einen Seite und mit einem zweiten Elektrodenmaterial auf seiner zweiten Seite, entfernt werden, wobei es auch im Verbund verbleiben kann, sofern es die Produkteigenschaften der fertigen (eigentlichen) Membranelektrodeneinheit nicht beeinträchtigt. Insgesamt ist mit der vorliegenden Erfindung der Vorteil verbunden, dass unmittelbar vor, während oder nach der Applikation des Flüssigklebstoffes zur Herstellung der Membranelektrodeneinheit das Fertigungshilfsmittel appliziert wird und nach kürzester Zeit die Festigkeit der Membranelektrodeneinheit übernimmt, bis der eigentliche Flüssigklebstoff selbst ausgehärtet ist und damit alle einzelnen Komponenten der Membranelektrodeneinheit gefügt sind.

### BEZUGSZEICHENLISTE:

- 1: Brennstoffzelle
- 2: Elektrolytmembran
- 3: erste Seite der Membran
- 4: Elektrode / Anode
- 5: zweite Seite der Membran
- 6: Elektrode / Kathode
- 7: anodenseitige Gasdiffusionslage
- 8: kathodenseitige Gasdiffusionslage
- 9: Bipolarplatte Brennstoffgas
- 10: Bipolarplatte Kathodengas
- 11: Brennstoffflussfeld
- 12: Kathodengasflussfeld

## Patentansprüche

1. Verfahren zur Herstellung eines wenigstens zweilagigen Laminats einer Membranelektrodeneinheit (MEA) für eine Brennstoffzelle (1), umfassend die Schritte:
- Bereitstellen eines Membranmaterials aus einem protonenleitfähigen Elektrolyten,
- Bereitstellen eines wenigstens einen Katalysator umfassenden Elektrodenmaterials,
- Auftragen eines Flüssigklebstoffes auf eine Oberfläche des Membranmaterials und/oder auf eine Oberfläche des Elektrodenmaterials, und
- Kontaktieren der Oberflächen des Membranmaterials und des Elektrodenmaterials zur Ausbildung einer stoffschlüssigen Verbindung mittels des Flüssigklebstoffs, wobei zusätzlich ein Fertigungshilfsmittel in einen oder auf einen Verbund eingebracht oder aufgebracht wird, der aus dem Elektrodenmaterial, aus dem Membranmaterial und dem noch unausgehärteten Flüssigklebstoff gebildet ist, wobei das Fertigungshilfsmittel dazu eingerichtet ist, den unausgehärteten Verbund zu stabilisieren, **dadurch gekennzeichnet, dass** das Fertigungshilfsmittel als ein Fügemittel zur stoffschlüssigen Anbindung an das Membranmaterial und/oder an das Elektrodenmaterial gebildet ist, welches gegenüber dem Flüssigklebstoff eine geringere Aushärtezeit besitzt.

2. Verfahren nach Anspruch 1, **dadurch gekennzeichnet, dass** das Fertigungshilfsmittel zur Stabilisierung des unausgehärteten Verbunds in einem abseits eines aktiven Bereichs der Membranelektrodeneinheit (MEA) gelegenen Randbereich appliziert wird.

3. Verfahren nach Anspruch 1 oder 2, **dadurch gekennzeichnet, dass** das Fertigungshilfsmittel zur Stabilisierung des unausgehärteten Verbunds punktuell und/oder flächig und/oder linienförmig appliziert wird.

4. Verfahren nach einem der Ansprüche 1 bis 3, **dadurch gekennzeichnet, dass** das Fügemittel ein durch UV-Licht aushärtbarer Klebstoff ist, und dass das Fügemittel unter UV-Bestrahlung ausgehärtet wird, noch bevor der Flüssigklebstoff ausgehärtet ist.

5. Verfahren nach einem der Ansprüche 1 bis 3, **dadurch gekennzeichnet, dass** das Fügemittel ein Haftklebstoff in Form eines Klebebands ist, das abseits des Flüssigklebstoffes an einer oder an beiden Oberflächen appliziert wird.

6. Verfahren nach einem der Ansprüche 1 bis 3, **dadurch gekennzeichnet, dass** das Fügemittel ein Schmelzklebstoff ist, der unter Wärmeeinwirkung verflüssigt und wieder ausgehärtet wird, noch bevor der Flüssigklebstoff ausgehärtet ist.

7. Verfahren nach einem der Ansprüche 1 bis 3, **dadurch gekennzeichnet, dass** das Fügemittel eine Laminatverbindung ausbildet, die noch vor dem Flüssigklebstoff aushärtet.

8. Verfahren nach einem der Ansprüche 1 bis 3, **dadurch gekennzeichnet, dass** das Fertigungshilfsmittel einen Rahmen umfasst, der auf den unausgehärteten Verbund aufgesetzt oder in diesen integriert wird, und dass der Rahmen punktuell und/oder flächig und/oder linienförmig aufgeschmolzen und wieder ausgehärtet wird, noch bevor der der Flüssigklebstoff aushärtet.

9. Verfahren nach einem der Ansprüche 1 bis 8, **dadurch gekennzeichnet, dass** das Fertigungshilfsmittel nach dem Aushärten des Flüssigklebstoffs im Verbund verbleibt.

## Claims

1. A method of manufacturing an at least two-layer laminate of a membrane electrode assembly (MEA) for a fuel cell (1), comprising the steps:
- providing a membrane material comprising a proton-conductive electrolyte,
- providing an electrode material comprising at least one catalyst,
- applying a liquid adhesive to a surface of the membrane material and/or to a surface of the electrode material, and
- contacting the surfaces of the membrane material and of the electrode material to form a substance-to-substance bond by means of the liquid adhesive, wherein in addition a production aid is introduced into or applied to a composite formed from the electrode material, from the membrane material and from the still uncured liquid adhesive, the production aid being set up to stabilize the uncured composite, **characterized in that** the production aid is formed as a joining agent for material bonding to the membrane material and/or to the electrode material, which has a shorter curing time than the liquid adhesive.

2. The method according to claim 1, **characterized in that** the production aid for stabilizing the uncured composite is applied in an edge region located away from an active region of the membrane electrode assembly (MEA).

3. The method according to claim 1 or 2, **characterized in that** the production aid for stabilizing the uncured composite is applied selectively and/or over a wide area and/or in a linear manner.

4. The method according to any one of claims 1 to 3, **characterized in that** the joining agent is an adhesive curable by UV light, and **in that** the joining agent is cured under UV irradiation even before the liquid adhesive has cured.

5. The method according to any one of claims 1 to 3, **characterized in that** the joining agent is a pressure-sensitive adhesive in the form of an adhesive tape applied away from the liquid adhesive to one or both surfaces.

6. The method according to any one of claims 1 to 3, **characterized in that** the joining agent is a hot-melt adhesive which is liquefied under the action of heat and cured again even before the liquid adhesive has cured.

7. The method according to any one of claims 1 to 3, **characterized in that** the joining agent forms a laminate joint which cures even before the liquid adhesive.

8. The method according to any one of claims 1 to 3, **characterized in that** the production aid comprises a frame which is placed on or integrated into the uncured composite, and **in that** the frame is melted on in a punctiform and/or laminar and/or linear manner and cured again even before the liquid adhesive cures.

9. The method according to any one of claims 1 to 8, **characterized in that** the production aid remains in the composite after the liquid adhesive has cured.

## Revendications

1. Procédé de fabrication d'un stratifié au moins à deux couches d'une unité membrane-électrode (MEA) pour une pile à combustible (1), comprenant les étapes suivantes :
- la fourniture d'un matériau de membrane constitué d'un électrolyte conducteur de protons,
- la fourniture d'un matériau d'électrode comprenant au moins un catalyseur,
- l'application d'une colle liquide sur une surface du matériau de membrane et/ou sur une surface du matériau d'électrode, et
- la mise en contact des surfaces du matériau de membrane et du matériau d'électrode pour la réalisation d'une liaison de matière à l'aide de la colle liquide, dans lequel un moyen auxiliaire de fabrication est introduit ou appliqué en outre dans un ou sur un composite qui est formé à partir du matériau d'électrode, du matériau de membrane et de la colle liquide qui n'est pas encore durcie, dans lequel le moyen auxiliaire de fabrication est conçu afin de stabiliser le composite non durci, **caractérisé en ce que** le moyen auxiliaire de fabrication est formé comme un moyen d'assemblage pour la liaison de matière avec le matériau de membrane et/ou avec le matériau d'électrode qui possède par rapport à la colle liquide un temps de durcissement plus faible.

2. Procédé selon la revendication 1, **caractérisé en ce que** le moyen auxiliaire de fabrication est appliqué pour la stabilisation du composite non durci dans une zone de bord placée à l'écart d'une zone active de l'unité membrane-électrode (MEA).

3. Procédé selon la revendication 1 ou 2, **caractérisé en ce que** le moyen auxiliaire de fabrication est appliqué ponctuellement et/ou sur la surface et/ou linéairement pour la stabilisation du composite non durci.

4. Procédé selon l'une quelconque des revendications 1 à 3, **caractérisé en ce que** le moyen d'assemblage est une colle durcissable par la lumière UV, et que le moyen d'assemblage est durci sous rayonnement UV, avant même que la colle liquide ne soit durcie.

5. Procédé selon l'une quelconque des revendications 1 à 3, **caractérisé en ce que** le moyen d'assemblage est un adhésif en forme de ruban adhésif qui est appliqué à l'écart de la colle liquide à une ou aux deux surfaces.

6. Procédé selon l'une quelconque des revendications 1 à 3, **caractérisé en ce que** le moyen d'assemblage est une colle thermofusible qui est liquéfiée sous l'effet de la chaleur et de nouveau durcie, avant même que la colle liquide ne soit durcie.

7. Procédé selon l'une quelconque des revendications 1 à 3, **caractérisé en ce que** le moyen d'assemblage forme un joint de stratifié qui durcit avant même la colle liquide.

8. Procédé selon l'une quelconque des revendications 1 à 3, **caractérisé en ce que** le moyen auxiliaire de fabrication comporte un cadre qui est placé sur le composite non durci ou intégré dans celui-ci, et que le cadre est fondu ponctuellement et/ou sur la surface et/ou linéairement et de nouveau durci avant même que la colle liquide ne durcisse.

9. Procédé selon l'une quelconque des revendications 1 à 8, **caractérisé en ce que** le moyen auxiliaire de fabrication reste après le durcissement de la colle liquide dans le composite.
